# EUROPEAN PATENT SPECIFICATION

(11) **EP 4 321 819 B1**
(45) Date of publication and mention of the grant of the patent: **23.04.2025**
(21) Application number: 23190220.6
(22) Date of filing: 08.08.2023
(51) Int. Cl.: F24F 13/10, F24F 11/00, F24F 12/00, F24F 1/029, F24F 11/41, F24F 11/81, F24F 3/00, F24F 3/044, F24F 7/08, F24F 13/08, F24F 11/67

(54) **AIR CONDITIONING DEVICE**
KLIMATISIERUNGSVORRICHTUNG
DISPOSITIF DE CLIMATISATION

(30) Priority: 11.08.2022 IT 202200017193
(43) Date of publication of application: 14.02.2024
(73) Proprietor: Tesio Cooling Systems S.p.A., 10024 Moncalieri (TO) (IT)
(72) Inventor: DIGIACOMO, Flavia, 10024 Moncalieri (TO) (IT); AGOSTINI, Francesco, 10024 Moncalieri (TO) (IT); EVANGELISTA, Luca, 10024 Moncalieri (TO) (IT)
(74) Representative: Studio Torta S.p.A.

(56) References cited:
- EP-B1- 1 348 911
- WO-A1-2019/078771
- CN-A- 101 317 041
- DE-A1- 10 042 830

## Description

### TECHNICAL FIELD

The present invention relates to an air conditioning device for conditioning the air present in an indoor environment.

In particular, the present invention finds advantageous, but not exclusive, application in the air conditioning of an indoor environment of a building, for example one or more rooms of a dwelling or a commercial establishment.

The present invention can also be applied for the air conditioning of indoor environments of means of transport, such as a train carriage.

### STATE OF THE ART

Air conditioning devices for conditioning the air present in an indoor environment of a building, such as a dwelling, or of a means of transport, such as a train carriage, are well known. An air conditioning device according to the preamble of claim 1 is known from document EP 1 348 911 B1.

In particular, such air conditioning devices (generally known as "HVAC") are configured to heat or cool the aforementioned indoor environment.

For this purpose, a typical air conditioning device comprises:
- a fluidic circuit designed to circulate an operative fluid, for example freon^{®} or the like, such as the R410A cooling fluid, through appropriate heat exchangers, such as a condenser and an evaporator, defining heat exchange interfaces between the operative fluid and the air conveyed thereto; and
- ventilation means configured to convey the air to be conditioned, drawn from the outside, to a first exchanger between the condenser and the evaporator and, from these, introduce it into the environment to be conditioned, and to convey the air inside the environment to a second exchanger between the condenser and the evaporator and, from these, extract it towards the outdoor environment.

As it is known, the air conveyed to the condenser will be heated, whereas the air conveyed to the evaporator will be cooled.

The fluidic circuit also includes well-known members designed to establish the circulation of the operative fluid, for example a compressor, expansion valve, etc., and configured to establish a thermodynamic cycle for air conditioning.

For the purpose of cooling and heating the environment to be conditioned, an air conditioning device of the above type defines two operating conditions or modes, in particular a "winter" condition whereby the air to be conditioned intended for the indoor environment is heated, and a "summer" condition whereby the air to be conditioned intended for the indoor environment is cooled.

For this purpose, it is known to reverse the thermodynamic cycle established within the fluidic circuit, for example by means of a reversing valve.

According to this configuration, each exchanger is capable of selectively acting as a condenser or an evaporator and the direction of flow of the operative fluid within the circuit is reversed depending on the operating condition.

More precisely:
- in the winter condition, the aforesaid first exchanger is defined by the condenser and the aforesaid second exchanger is defined by the evaporator, so that the air introduced into the indoor environment is heated and, due to the balance of the thermodynamic cycle, the air extracted towards the outdoor environment is cooled; and
- in the summer condition, the first exchanger is defined by the evaporator and the second exchanger is defined by the condenser, so that the air introduced into the indoor environment is cooled and, due to the balance of the thermodynamic cycle, the air extracted towards the outdoor environment is heated.

However, the Applicant noted that air conditioning devices operating according to this configuration have certain disadvantages.

In particular, the direction of flow of the air to be conditioned and of the extracted air remains constant in this case. Therefore, when the thermodynamic cycle between the summer and winter modes is reversed, and hence the direction of flow of the operative fluid within the circuit is reversed, one of the condenser and the evaporator will necessarily operate in co-current flow in one of the conditions.

As it is known, heat exchangers operate at their maximum efficiency in counter-current flow. However, according to the above configuration, the condenser and evaporator cannot both operate in counter-current flow during both winter and summer conditions.

It is therefore necessary to decide at the design stage which exchanger to "sacrifice" in terms of efficiency, i.e., decide which exchanger will operate in co-current flow, or to oversize this exchanger, however, with increased costs and overall dimensions.

Ice formation within the evaporator during the winter operating condition is also known in the sector.

In particular, a layer of ice may form on the heat exchange elements of the evaporator (fins and/or ducts) under certain conditions, e.g., with external temperatures below a certain threshold. This layer of ice thermally insulates the exchange surfaces and impairs the efficiency of the heat exchange, thus reducing the effectiveness of the evaporator.

A so-called ice melting operation, known in the sector as de-icing or defrosting, must therefore be carried out periodically in order to remove the ice layer.

Typically, the de-icing operation is performed by temporarily reversing the thermodynamic cycle within the circuit, whereby the evaporator temporarily functions as a condenser, and vice versa.

However, this configuration involves many problems: the heating of the indoor environment is temporarily interrupted and, indeed, cold air is temporarily introduced into the environment; furthermore, the compressor is temporarily switched off to allow the cycle to be reversed and, at the end of the de-icing operation, it needs a few minutes to complete the start-up transient.

### OBJECT AND SUMMARY OF THE INVENTION

The object of the present invention is to provide an air conditioning device, which is highly reliable and cost-effective, and allows at least some of the above-mentioned drawbacks related to the well-known air conditioning devices to be obviated.

According to the invention, this object is achieved by means of an air conditioning device as claimed in claim **1.**

### BRIEF DESCRIPTION OF THE DRAWINGS

For a better understanding of the present invention, some preferred non-limiting embodiments thereof are described below purely by way of example and with the aid of the accompanying drawings, wherein:
- Figures 1, 3, 5 and 7 are schematic plan views, with parts removed for clarity, of an air conditioning device manufactured according to the present invention during four distinct operating modes;
- Figures 2, 4 and 6 are perspective views, with parts removed for clarity, of the air conditioning device according to the invention during three distinct operating modes; and
- Figure 8 is a schematic plan view, with parts removed for clarity, of an air conditioning device manufactured according to an alternative embodiment of the present invention.

### DETAILED DESCRIPTION

With reference to the accompanying figures, number 1 indicates, as a whole, an air conditioning device for conditioning the air present in an indoor environment.

Preferably, the indoor environment is defined by one or more rooms of a building, for example a dwelling or commercial establishment, or by one or more rooms of a means of transport, for example a train carriage.

The device 1 is of the HVAC type and comprises:
- a fluidic circuit 2 configured to circulate a conditioning operative fluid, e.g., freon^{®} or the like, and including a condenser 3 and an evaporator 4 which are configured for defining heat exchange interfaces between the operative fluid and the air conveyed thereto (according to a known mode typical of HVAC devices); and
- a casing 50 housing the circuit 2, internally defining a first compartment 5 housing the condenser 3 and a second compartment 6 housing the evaporator 4, and having a first inlet 7a fluidly connectable with an outdoor environment to receive therefrom outdoor air to be conditioned, a second inlet 7b fluidly connectable with the indoor environment to receive therefrom stale air, a first outlet 8a fluidly connectable with the indoor environment to introduce therein conditioned air and a second outlet 8b fluidly connectable with the outdoor environment to eject the stale air.

Suitably, the circuit 2 also includes known members, such as a compressor 10, an expansion valve 11, a dryer, an accumulator, etc., suitable to establish the circulation of the operative fluid and configured to establish a thermodynamic cycle for the conditioning (i.e., heating or cooling) of the air, according to a known mode, not described in detail, typical of devices of the HVAC type.

Conveniently, the first compartment 5 and the second compartment 6 are fluidly separated and/or independent.

Suitably, the device 1 further comprises forced ventilation means 20, 21 configured to establish, inside the casing 50, an outdoor air flow to be conditioned withdrawn from the first inlet 7a and a stale air flow withdrawn from the second inlet 7b.

In detail, the forced ventilation means include a first fan member 20 arranged in the first compartment 5 for conveying air to the condenser 3 and a second fan member 21 arranged in the second compartment 6 for conveying air to the evaporator 4.

For the purpose of selectively cooling and heating the indoor environment, the device 1 can operate in at least two different operating conditions or modes, in particular a "winter" operating mode whereby the air to be conditioned intended for the indoor environment is heated, and a "summer" operating mode whereby the air to be conditioned intended for the indoor environment is cooled.

The peculiar configuration of the device 1 according to the invention which allows switching between the aforementioned and other operating modes will be illustrated below.

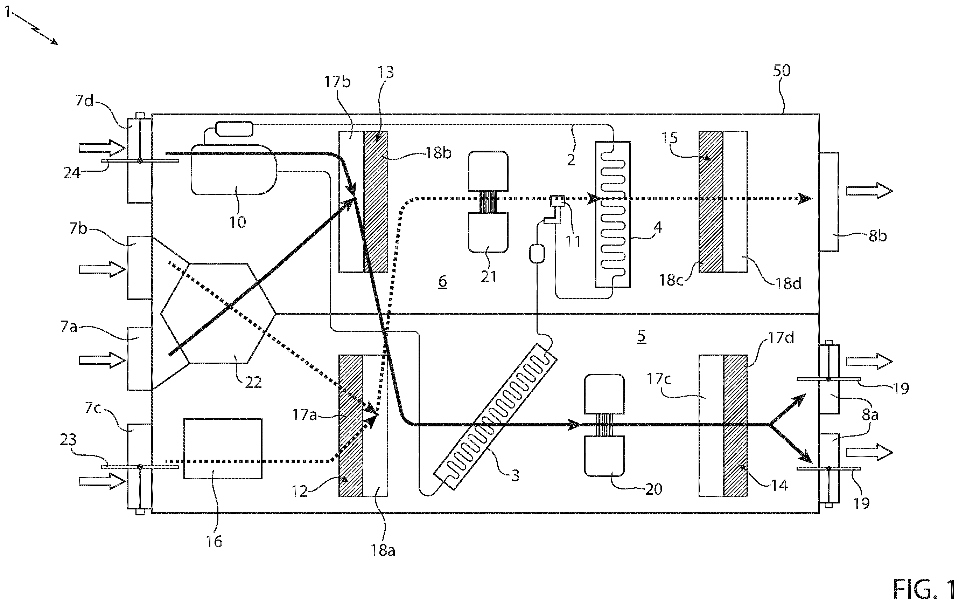

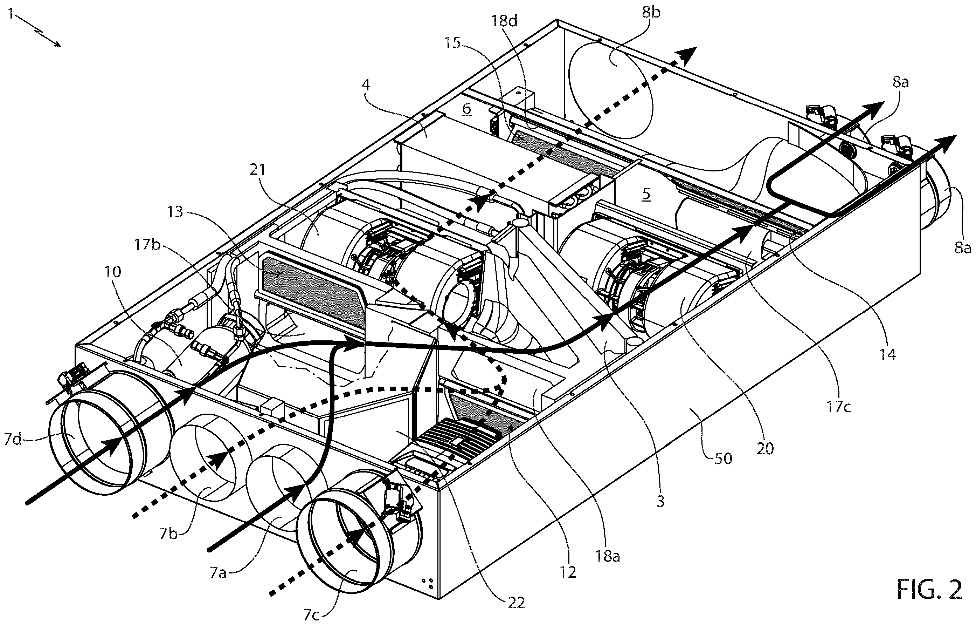

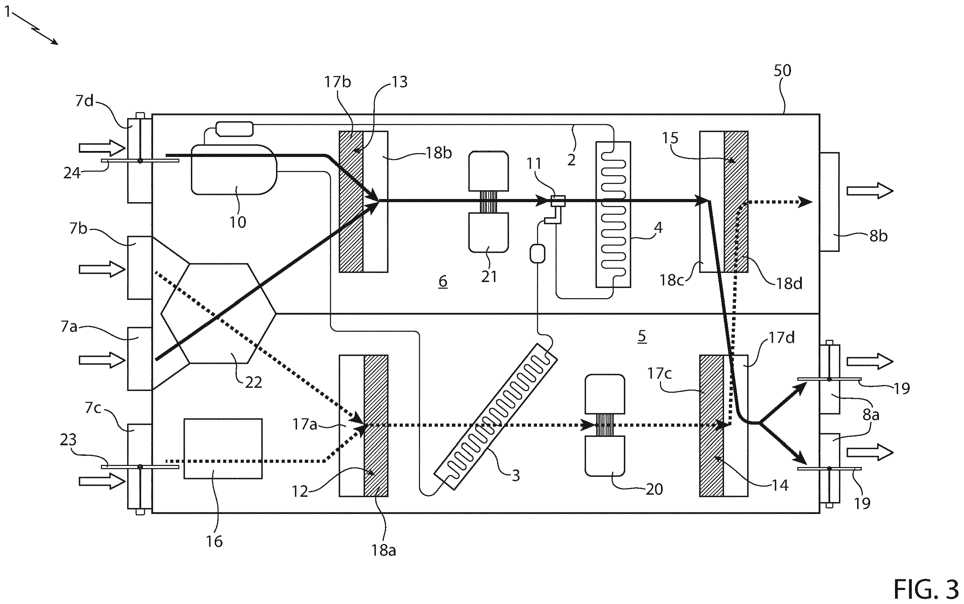

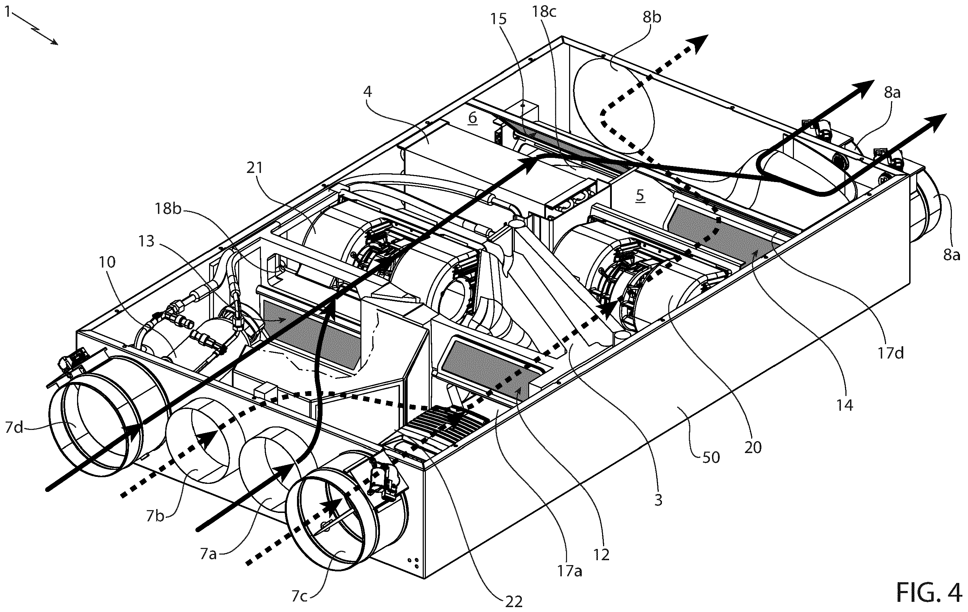

According to one aspect of the invention, the device 1 comprises:
- a pair of upstream flaps 12, 13 fluidly arranged downstream of the first inlet 7a and of the second inlet 7b and upstream of the first compartment 5 and of the second compartment 6 and actuatable to respectively direct the outdoor air and the stale air selectively towards the condenser 3 or the evaporator 4;
- a pair of downstream flaps 14, 15 fluidly arranged downstream of the first compartment 5 and of the second compartment 6, respectively, and upstream of the first outlet 8a and of the second outlet 8b and actuatable to respectively direct the heated air and the cooled air selectively towards the first outlet 8a or the second outlet 8b; and
- a control unit 16 configured to control the actuation of the upstream flaps 12, 13 and the downstream flaps 14, 15 for defining: a heating operating mode for heating the indoor environment (Figures 1 and 2), in which the upstream flaps 12, 13 are actuated to direct respectively the stale air towards the second compartment 6 and the outdoor air towards the first compartment 5, and the downstream flaps 14, 15 are actuated to respectively direct the heated air towards the first outlet 8a and the cooled air towards the second outlet 8b; and a cooling operating mode for cooling the indoor environment (Figures 3 and 4), in which the upstream flaps 12, 13 are actuated to respectively direct the stale air towards the first compartment 5 and the outdoor air towards the second compartment 6, and the downstream flaps 14, 15 are actuated to respectively direct the heated air towards the second outlet 8b and the cooled air towards the first outlet 8a.

In particular:
- the first compartment 5 has a first opening 17a to receive the stale air, a second opening 17b to receive the outdoor air, a third opening 17c to feed heated air from the condenser 3 to the first outlet 8a and a fourth opening 17d to feed heated air from the condenser 3 to the second outlet 8b;
- the second compartment 6 has a first opening 18a to receive the stale air, a second opening 18b to receive the outdoor air, a third opening 18c to feed cooled air from the evaporator 4 to the first outlet 8a and a fourth opening 18d to feed cooled air from the evaporator 4 to the second outlet 8b.

In other words, the first compartment 5 has two upstream openings 17a, 17b to receive the stale air and the outdoor air, respectively, and two downstream openings 17c, 17d to selectively eject the stale air or the conditioned air.

Similarly, the second compartment 6 has two upstream openings 18a, 18b to receive the stale air and the outdoor air, respectively, and two downstream openings 18c, 18d to selectively eject the stale air or the conditioned air.

According to this preferred embodiment, the upstream flaps comprise:
- a first flap 12 fluidly arranged downstream of the second inlet 7b and at said first openings 17a, 18a and actuatable to selectively close the first opening 17a or the first opening 18a so as to allow the passage of the stale air towards the second compartment 6 or the first compartment 5, respectively; and
- a second flap 13 fluidly arranged downstream of the first inlet 7a and at said second openings 17b, 18b and actuatable to selectively close the second opening 17b or the second opening 18b so as to allow the passage of the outdoor air towards the second compartment 6 or the first compartment 5, respectively.

Furthermore, the downstream flaps comprise:
- a third flap 14 fluidly arranged downstream of the condenser 3 and at the third opening 17c and fourth opening 17d of the first compartment 5 and actuatable to selectively close the third opening 17c or the fourth opening 17d of the first compartment 5 so as to allow the passage of heated air towards the second outlet 8b or the first outlet 8a, respectively; and
- a fourth flap 15 fluidly arranged downstream of the evaporator 4 and at the third opening 18c and fourth opening 18d of the second compartment 6 and actuatable to selectively close the third opening 18c or the fourth opening 18d of the second compartment 6 so as to allow the passage of cooled air towards the second outlet 8a or the first outlet 8b, respectively.

According to the invention, the control unit 16 is configured to control the actuation of the first flap 12, the second flap 13, the third flap 14 and the fourth flap 15 for defining:
- the heating operating mode for heating the indoor environment, in which the first flap 12 closes the first opening 17a of the first compartment (thus allowing the passage of the stale air through the first opening 18a of the second compartment and towards the evaporator 4), the second flap 13 closes the second opening 18b of the second compartment (thus allowing the passage of the outdoor air to be conditioned through the second opening 17b of the first compartment and towards the condenser 3), the third flap 14 closes the fourth opening 17d of the first compartment (thus allowing the passage of the heated air from the condenser 3 through the third opening 17c of the first compartment and towards the first outlet 8a, hence towards the indoor environment to warm it), and the fourth flap 15 closes the third opening 18c of the second compartment (thus allowing the passage of the stale air through the fourth opening 18d of the second compartment and towards the second outlet 8b, hence towards the outdoor environment); and
- the cooling operating mode for cooling the indoor environment, in which the first flap 12 closes the first opening 18a of the second compartment (thus allowing the passage of the stale air through the first opening 17a of the first compartment and towards the condenser 3), the second flap 13 closes the second opening 17b of the first compartment (thus allowing the passage of the outdoor air to be conditioned through the second opening 18b of the second compartment and towards the evaporator 4), the third flap 14 closes the third opening 17c of the first compartment (thus allowing the passage of the heated air from the condenser 3 through the fourth opening 17d of the first compartment and towards the second outlet 8b, hence towards the outdoor environment), and the fourth flap 15 closes the fourth opening 18d of the second compartment (thus allowing the passage of the stale air through the third opening 18c of the second compartment and towards the first outlet 8a, hence towards the indoor environment to cool it).

In other words, the flaps 12, 13, 14, 15 are actuatable so they can selectively cooperate with the various openings to allow or prevent the passage of air through them.

This configuration allows switching between the winter and summer operating modes without the need to reverse the thermodynamic cycle within the circuit 2. This results in improved efficiency of the condenser 3 and the evaporator 4, as they can both operate in counter-current flow in the different operating modes.

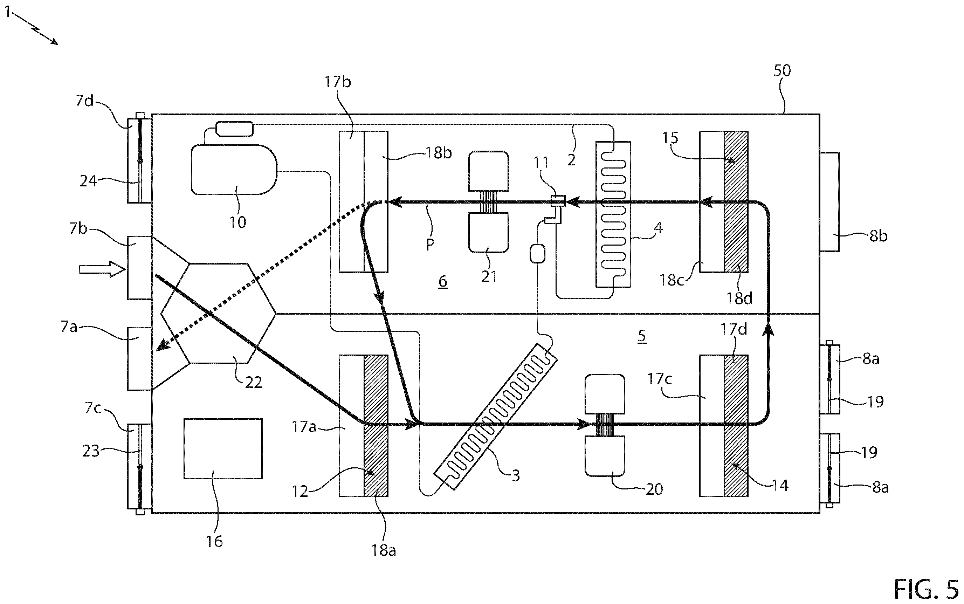

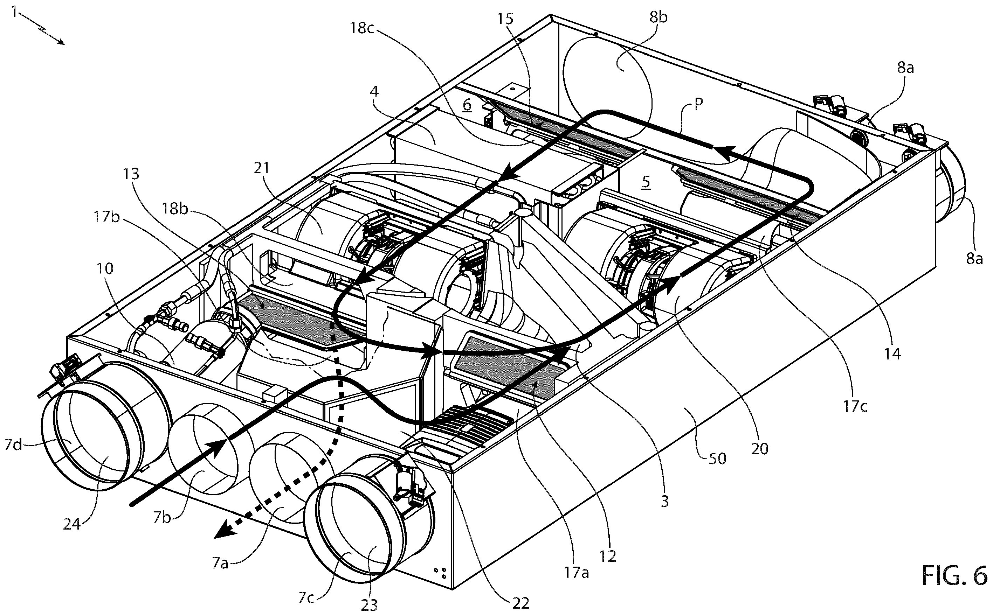

According to a further aspect of the present invention:
- the device 1 further comprises a first gate valve 19 arranged at the first outlet 8a and actuatable to allow or prevent the passage of air through the first outlet 8a;
- the control unit 16 is further configured to control the actuation of the gate valve 19, of the first flap 12, of the second flap 13, of the third flap 14 and of the fourth flap 15 for defining a first de-icing operating mode (Figures 5 and 6) in which the first flap 12 closes the first opening 18a of the second compartment (thus allowing the passage of the stale air through the first opening 17a of the first compartment and towards the condenser 3), the second flap 13 is positioned so as to leave open at least the second opening 18b of the second compartment, the third flap 14 closes the fourth opening 17d of the first compartment, the fourth flap 15 closes the fourth opening 18d of the second compartment, and the gate valve 19 closes the first outlet 8a.

In particular, according to this aspect of the invention, the control unit 16 is configured to control the forced ventilation means 20, 21 so that, in said first de-icing operating mode, the first fan member 20 is active and the second fan member 21 is inactive, for determining a recirculation path P of the air in the casing 50 (Figure 5) sequentially through: the first opening 17a of the first compartment 5, the condenser 3, the third opening 17c of the first compartment 5, the third opening 18c of the second compartment 6, the evaporator 4 (so as to heat it and de-ice it), the second opening 18b of the second compartment 6, and again through the first opening 17a of the first compartment 5.

This configuration allows the de-icing of the evaporator 4 without the need to reverse the thermodynamic cycle or stop the compressor 10, but simply by appropriately actuating the flaps 12, 13, 14, 15 and the gate valve 19 to establish the above-mentioned recirculation path P of the air within the casing 50.

In fact, in use, the air recirculating along the recirculation path P is repeatedly heated with each passage through the condenser 3, each time increasing the temperature of the evaporator 4 with each passage through it.

In an alternative embodiment, the control unit 16 is configured to actuate the third flap 14 to close the third opening 17c and the fourth flap 15 to close the third opening 18c. In this case, the gate valve 19 is conveniently arranged at the second outlet 8b to close it. The recirculation path P is almost unchanged.

However, providing the gate valve 19 at the first opening 8a allows the conditioned air fed to the indoor environment to be partitioned by controlling the degree of opening of the gate valve 19 itself.

In an alternative embodiment, not shown, the control unit 16 is configured to control the forced ventilation means 20, 21 so that, in said first de-icing operating mode, the first fan member 20 is inactive and the second fan member 21 is active, for determining an alternative recirculation path in the direction opposite path P. In this case, the flaps 12, 13, 14, 15 shall be suitably positioned to guarantee the recirculation of the air along this alternative path. This alternative configuration allows the air flow to always pass through the evaporator in the same direction, even during de-icing. The Applicant noted that this, in some cases, is particularly advantageous in terms of efficiency.

According to this preferred, non-limiting embodiment, the device 1 comprises a heat recovery unit 22, preferably a known static recovery unit, configured to define a heat exchange interface between the outdoor air supplied, in use, through the first inlet 7a and the stale air supplied, in use, through the second inlet 7b.

Conveniently, the recovery unit 22 is placed downstream of the first inlet 7a and of the second inlet 7b and upstream of the first openings 17a, 18a and of the second openings 17b, 18b, so as to be lapped, in said first de-icing operating mode, by the air recirculated along the recirculation path P.

The peculiar configuration of the device 1 in said first de-icing operating mode also allows the recovery unit 22 to be heated in order to remove any layer of ice that may have formed thereon.

In the light of the above, the device 1 also defines a MEV (Mechanical Extract Ventilation)-type system, i.e., a system configured to exchange the stale air from the indoor environment with new air coming, in use, from the outdoor environment and to passively recover, by means of the recovery unit 22, up to 90% of the energy otherwise lost in the ventilation.

Advantageously, the control unit 16 is configured to control the actuation of the second flap 13, for defining said first de-icing operating mode, positioning it to leave open both the second openings 17b, 18b, so that the recirculation path P is defined sequentially through: the first opening 17a and the second opening 17b of the first compartment, the condenser 3, the third opening 17c of the first compartment, the third opening 18c of the second compartment, the evaporator 4, the second opening 18b of the second compartment, and again through the first opening 17a and the second opening 17b of the first compartment.

In this way, the amount of air flow passing through the evaporator 4, and therefore now cooled, which passes through the recovery unit 22 is limited, as this fluidic path is the least favoured due to the activation of the first fan member 20 and the deactivation of the second fan member 21.

In fact, most of this cooled air flow mixes with the stale air, cooling it, but with a less impactful effect (in particular, compared to the exchange of the entire flow of air, now cold, that would necessarily pass through the recovery unit 22 and exchange with the stale air flow, cooling it), since the conditions of the air in a mixture are always closer to those of the air mixture with the highest flow rate, which in this case is the stale air.

In other words, by leaving both openings 17a and 17b open, the recirculation of the heated air along the recirculation path P is improved, thus enhancing the de-icing effect at the evaporator 4 and the recovery unit 22.

Preferably, in said first de-icing operating mode, the control unit 16 controls a movement of the second flap 13 to a position midway between the second openings 17b, 18b.

The Applicant noted that this positioning of the second flap 13 is the best from the point of view of fluid dynamics, heat exchange efficiency and de-icing effectiveness.

Alternatively, in said first de-icing operating mode, the control unit 16 could control the movement of the second flap 13 to a position closer to the second opening 17b or to the second opening 18b.

In an alternative embodiment, the control unit 16 is configured to actuate the second flap 13, so that only the second opening 18b is left open.

Preferably, the casing 50 has a third inlet 7c fluidly connectable with the outdoor environment to receive therefrom an additional quantity of outdoor air, and a fourth inlet 7d fluidly connectable with the indoor environment to receive therefrom air to be recirculated and reintroduced into the indoor environment.

More precisely:
- the third inlet 7c is fluidly arranged upstream of the first openings 17a, 18a to feed therein, selectively, (i.e., by means of the selective actuation of the first flap 12) said additional quantity of outdoor air;
- the fourth inlet 7d is fluidly arranged upstream of the second openings 17b, 18b to feed therein, selectively, (i.e., by means of the selective actuation of the second flap 13) said air to be recirculated.

The presence of the third inlet 7c and the fourth inlet 7d is well-known in the art and allows the efficiency of the heat exchanges and of the thermodynamic cycle to be improved, in a well-known way and due to the respective additional air flow rates.

Conveniently, the device 1 comprises a second gate valve 23 arranged at the third inlet 7c and actuatable to allow or prevent the passage of air through the third inlet 7c, and a fourth gate valve 24 arranged at the fourth inlet 7d and actuatable to allow or prevent the passage of air through the fourth inlet 7d.

The presence of the gate valves 23, 24 also allows the quantities of air passing through the third inlet 7c and the fourth inlet 7d to be partitioned, in order to control and balance the heat exchanges according to the operating conditions.

According to one aspect of the invention, the control unit 16 is configured to control the actuation of the third gate valve 23 and of the fourth gate valve 24 so as to close the third inlet 7c and the fourth inlet 7b for defining said first de-icing operating mode.

This allows the first de-icing operating mode to be performed even in the presence of any additional air flows through the third inlet 7c and the fourth inlet 7d.

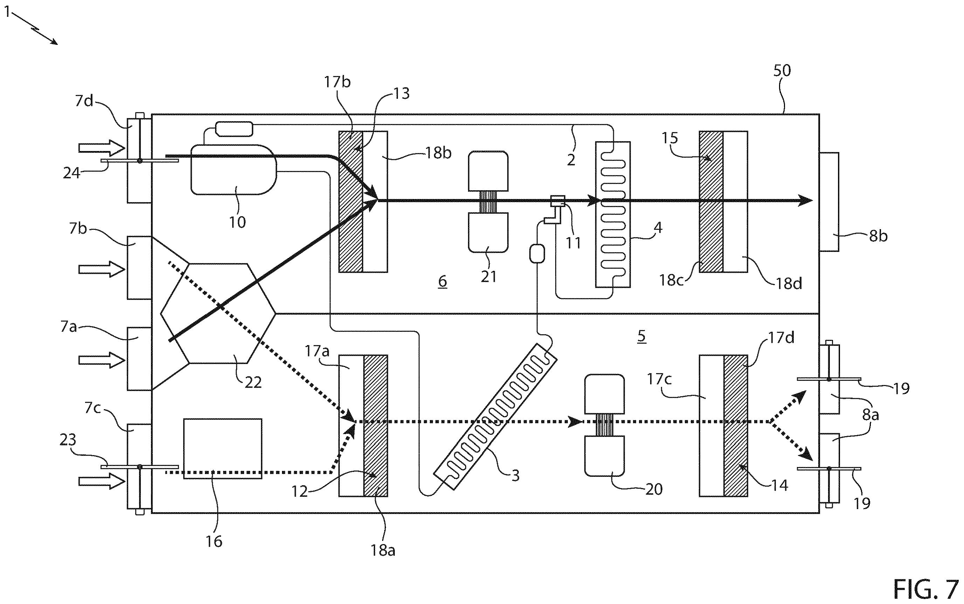

Referring to Figure 7, the control unit 16 is also configured to control the actuation of the first flap 12 and of the second flap 13 to define a second de-icing operating mode in which the first flap 12 closes the first opening 18a of the second compartment 6 and the second flap 13 closes the second opening 17b of the first compartment so that the air to be recirculated supplied, in use, from the fourth inlet 7d flows towards the evaporator 4, heating it and de-icing it.

Suitably, the control unit 16 is also configured, in said second de-icing operating mode, to control the opening of the gate valves 23, 24, if any.

Preferably, the control unit 16 is also configured, in order to define said second de-icing operating mode, to actuate the third flap 14 so as to close the fourth opening 17d of the first compartment 5 (thus allowing the passage of the heated air from the condenser 3 towards the first outlet 8a), and the fourth flap 15 so as to close the third opening 18c of the second compartment 6 (thus allowing the passage of the cooled air to de-ice the evaporator 4 towards the second outlet 8b).

This configuration allows the evaporator 4 to be de-iced easily and effectively, and without the need to reverse the thermodynamic cycle or stop the compressor 10.

Furthermore, the peculiar positioning of the third flap 14 and the fourth flap 15 allows the air cooled by the evaporator 4 to be ejected, even though stale air must be recirculated in the indoor environment.

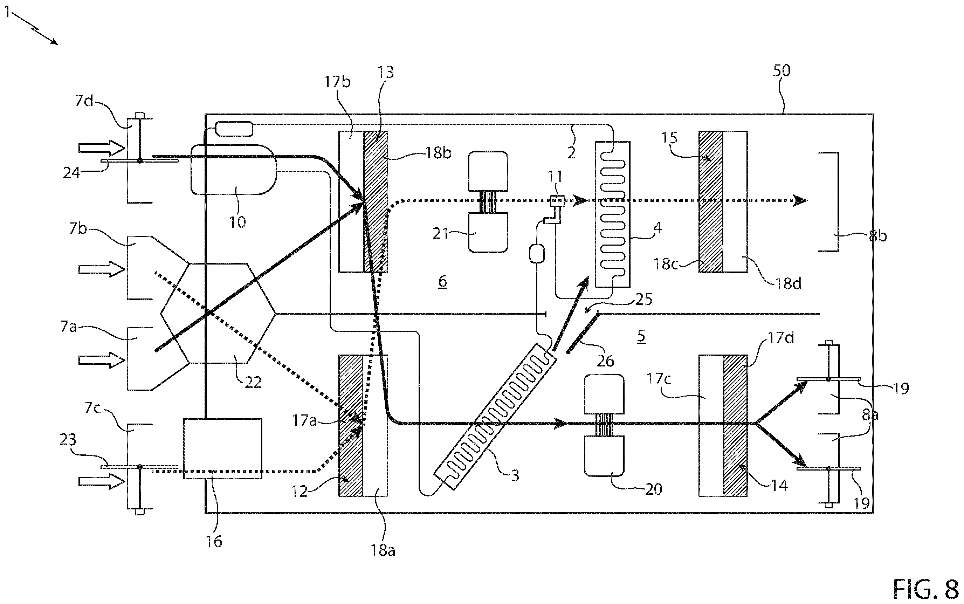

With reference to Figure 8, an alternative embodiment of the present invention will now be described. Since this embodiment is similar to the embodiments described above, the same references for similar or corresponding parts will be used wherever possible.

In particular, according to this alternative embodiment, the casing 50 comprises a fifth opening 25 fluidly interposed between the first compartment 5 and the second compartment 6 to allow fluid communication between them, and in particular fluidly positioned downstream of the condenser 3 and upstream of the evaporator 4.

Furthermore, the device 1 comprises a fifth flap 26 arranged at the fifth opening 25 and actuatable to allow or prevent the passage of air through the fifth opening 25 itself.

According to this embodiment, the control unit 16 is configured to control the actuation of the fifth flap 26 for defining a third de-icing operating mode in which the fifth flap 26 opens the fifth opening 25 to allow the passage of heated air from the condenser 3 towards the evaporator 4, so as to heat it and de-ice it.

This configuration allows the evaporator 4 to be de-iced easily and effectively, and without the need to reverse the thermodynamic cycle or stop the compressor 10.

As can be seen in the accompanying drawings, the casing 50 preferably comprises at least two first outlets 8a and, suitably, at least two gate valves 19, respectively, located in the same position.

In this way, the conditioned air can be directed and conveyed to different rooms of the indoor environment, individually partitioning the outlets 8a as required.

From the above, it is clear that the device 1 allows the implementation of a method of conditioning the air present in an indoor environment, wherein the method comprises the steps of:
- controlling the actuation of the first flap 12, the second flap 13, the third flap 14 and the fourth flap 15 so that the first flap 12 closes the first opening 17a of the first compartment, the second flap 13 closes the second opening 18b of the second compartment, the third flap 14 closes the fourth opening 17d of the first compartment, and the fourth flap 15 closes the third opening 18c of the second compartment, for defining a heating operating mode for heating the indoor environment; and
- controlling the actuation of the first flap 12, the second flap 13, the third flap 14 and the fourth flap 15 so that the first flap 12 closes the first opening 18a of the second compartment, the second flap 13 closes the second opening 17b of the first compartment, the third flap 14 closes the third opening 17c of the first compartment, and the fourth flap 15 closes the fourth opening 18d of the second compartment, for defining a cooling operating mode for cooling the indoor environment.

Preferably, the method also comprises the step of:
- actuating the gate valve 19, the first flap, the second flap, the third flap, and the fourth flap, so that the first flap closes the first opening of the second compartment, the second flap is positioned so that at least the second opening of the second compartment, and preferably both the second openings, remain(s) open, the third flap closes the fourth opening of the first compartment, the fourth flap closes the fourth opening of the second compartment, and the gate valve closes the first outlet, for defining a first de-icing operating mode.

More particularly, the method comprises the step of:
- controlling the forced ventilation means 20, 21 so that, in said first de-icing operating mode, the first fan member 20 is active and the second fan member 21 is inactive, for determining a recirculation path P of the air in the casing 50 sequentially through: the first opening of the first compartment (and also preferably the second opening of the first compartment), the condenser, the third opening of the first compartment, the third opening of the second compartment, the evaporator, the second opening of the second compartment, and again through the first opening of the first compartment (and also preferably the second opening of the first compartment).

In one embodiment, the method comprises the step of:
- actuating the first flap and the second flap, so that the first flap closes the first opening of the second compartment and the second flap closes the second opening of the first compartment, so that the air to be recirculated supplied, in use, from the fourth inlet flows towards the evaporator, for defining a second de-icing operating mode.

Preferably, in this case, the method further comprises the step of:
- actuating the third flap so as to close the fourth opening of the first compartment, and the fourth flap so as to close the third opening of the second compartment, in order to define said second de-icing operating mode.

In one embodiment, the method comprises the step of:
- actuating the fifth flap 26 so that the fifth flap opens the fifth opening 25 to allow the passage of heated air from the condenser towards the evaporator, for defining a third de-icing operating mode.

The operation of the device 1 according to the present invention will be described below.

In particular, the compressor 10 circulates the operative fluid within the circuit 2, and through the condenser 3 and the evaporator 4, which maintain their function unchanged.

If there is a need to cool down the indoor environment, the control unit 16 controls the actuation of the flaps 12, 13, 14, 15 in the respective aforementioned positions to define the cooling operating mode.

If there is a need to heat the indoor environment, the control unit 16 controls the actuation of the flaps 12, 13, 14, 15 in the respective aforementioned positions to define the heating operating mode.

If, during the heating operating mode, a layer of ice is formed within the evaporator 4, the control unit 16 controls the actuation of the flaps 12, 13, 14, 15 and of the gate valve 19 (and, where applicable, of the gate valves 23 and 24) in the respective aforementioned positions to define the first de-icing operating mode.

Alternatively, the control unit 16 actuates the flaps 12, 13, 14, 15 (and, where applicable, the gate valves 19, 23 and 24) in the respective aforementioned positions to define the second de-icing operating mode.

Alternatively, the control unit 16 actuates the flap 26 to open the fifth opening 25 and define the third de-icing operating mode.

The advantages enabled by the device 1 manufactured according to the present invention will be apparent from an examination of the features thereof.

In particular, the configurations described above make it possible to de-ice the evaporator 4 without the need to reverse the thermodynamic cycle or stop the compressor 10. It is in fact possible to obtain the switching between the winter and summer operating modes without the need to reverse the thermodynamic cycle within the circuit 2. This results in improved efficiency of the condenser 3 and the evaporator 4, as they can both operate in counter-current flow in the different operating modes.

In addition, it is no longer necessary to decide at the design stage which exchanger to "sacrifice" in terms of efficiency or which exchanger to oversize, thus reducing total costs.

In particular, it is possible to implement (use) an evaporator and a condenser with appropriate geometries dedicated to the respective purpose.

For example, it is possible to implement ad hoc circuitry for the evaporator, as it does not have to perform the additional function of a condenser (for example, a particular distance between the fins to better withstand the formation of ice).

Furthermore, the dryer is always in contact with liquid, as it is always operatively arranged downstream of the condenser, unlike the known case which provides for reversing the cycle of the operative fluid.

In addition, the circuit 2 is simplified, as there is no need to provide a four-way valve for reversing.

It is clear that the device 1 described and illustrated herein can be subject to modifications and variations without however departing from the scope of protection defined by the claims.

## Claims

1. An air conditioning device (1) for conditioning the air present in an indoor environment, the device (1) comprising:
- a fluidic circuit (2) configured to circulate an operative fluid and including a condenser (3) and an evaporator (4) configured for defining respective heat exchange interfaces between the operative fluid and the air conveyed thereto;
- a casing (50) housing the fluidic circuit (2), internally defining a first compartment (5) housing the condenser (3) and a second compartment (6) housing the evaporator (4), and having a first inlet (7a) fluidly connectable with an outdoor environment to receive therefrom outdoor air to be conditioned, a second inlet (7b) fluidly connectable with the indoor environment to receive stale air, a first outlet (8a) fluidly connectable with the indoor environment to introduce therein conditioned air and a second outlet (8b) fluidly connectable with the outdoor environment to eject the stale air;
- a pair of upstream flaps (12, 13) fluidly arranged downstream of the first inlet (7a) and of the second inlet (7b) and upstream of the first compartment (5) and of the second compartment (6) and actuatable to respectively direct the outdoor air and the stale air selectively towards the condenser (3) or the evaporator (4); and
**characterised in that** the device comprising:
- a pair of downstream flaps (14, 15) fluidly arranged downstream of the first compartment (5) and of the second compartment (6), respectively, and upstream of the first outlet (8a) and of the second outlet (8b) and actuatable to respectively direct the heated air and the cooled air selectively towards the first outlet (8a) or the second outlet (8b);
wherein the device (1) also includes a control unit (16) configured to control the actuation of the upstream flaps (12, 13) and the downstream flaps (14, 15) for defining:
- a heating operating mode for heating the indoor environment, in which the upstream flaps (12, 13) are actuated to direct respectively the stale air towards the second compartment (6) and the outdoor air towards the first compartment (5), and the downstream flaps (14, 15) are actuated to respectively direct the heated air towards the first outlet (8a) and the cooled air towards the second outlet (8b); and
- a cooling operating mode for cooling the indoor environment, in which the upstream flaps (12, 13) are actuated to respectively direct the stale air towards the first compartment (5) and the outdoor air towards the second compartment (6), and the downstream flaps (14, 15) are actuated to respectively direct the heated air towards the second outlet (8b) and the cooled air towards the first outlet (8a).

2. The device as claimed in claim 1, wherein the first compartment (5) has a first opening (17a) to receive the stale air, a second opening (17b) to receive the outdoor air, a third opening (17c) to feed heated air from the condenser (3) to the first outlet (8a) and a fourth opening (17d) to feed heated air from the condenser (3) to the second outlet (8b);
wherein the second compartment (6) has a first opening (18a) to receive the stale air, a second opening (18b) to receive the outdoor air, a third opening (18c) to feed cooled air from the evaporator (4) to the first outlet (8a) and a fourth opening (18d) to feed cooled air from the evaporator (4) to the second outlet (8b);
the device (1) further comprising:
- a first flap (12) fluidly arranged downstream of the second inlet (7b) and at said first openings (17a, 18a) and actuatable to selectively close the first opening (17a) of the first compartment (5) or the first opening (18a) of the second compartment (6) so as to allow the passage of said stale air towards the second compartment (6) or the first compartment (5), respectively;
- a second flap (13) fluidly arranged downstream of the first inlet (7a) and at said second openings (17b, 18b) and actuatable to selectively close the second opening (17b) of the first compartment (5) or the second opening (18b) of the second compartment (6) so as to allow the passage of said outdoor air towards the second compartment (6) or the first compartment (5), respectively;
- a third flap (14) fluidly arranged downstream of the condenser (3) and at the third opening (17c) and fourth opening (17d) of the first compartment (5) and actuatable to selectively close the third opening (17c) or the fourth opening (17d) of the first compartment (5) so as to allow the passage of heated air towards the second outlet (8b) or the first outlet (8a), respectively; and
- a fourth flap (15) fluidly arranged downstream of the evaporator (4) and at the third opening (18c) and fourth opening (18d) of the second compartment (6) and actuatable to selectively close the third opening (18c) or the fourth opening (18d) of the second compartment (6) so as to allow the passage of cooled air towards the second outlet (8b) or the first outlet (8a), respectively;
and wherein the control unit (16) is configured to control the actuation of the first flap (12), the second flap (13), the third flap (14) and the fourth flap (15) for defining:
- said heating operating mode for heating the indoor environment, in which the first flap (12) closes the first opening (17a) of the first compartment (5), the second flap (13) closes the second opening (18b) of the second compartment (6), the third flap (14) closes the fourth opening (17d) of the first compartment (5), and the fourth flap (15) closes the third opening (18c) of the second compartment (6); and
- said cooling operating mode for cooling the indoor environment, in which the first flap (12) closes the first opening (18a) of the second compartment (6), the second flap (13) closes the second opening (17b) of the first compartment (5), the third flap (14) closes the third opening (17c) of the first compartment (5), and the fourth flap (15) closes the fourth opening (18d) of the second compartment (6).

3. The device as claimed in claim 2, and further comprising at least one gate valve (19) arranged at said first outlet (8a) and actuatable to allow or prevent the passage of air through the first outlet (8a);
and wherein the control unit (16) is further configured to control the actuation of the gate valve (19), of the first flap (12), of the second flap (13), of the third flap (14) and of the fourth flap (15) for defining a first de-icing operating mode in which the first flap (12) closes the first opening (18a) of the second compartment, the second flap (13) is positioned so as to leave open at least the second opening (18b) of the second compartment, the third flap (14) closes the fourth opening (17d) of the first compartment, the fourth flap (15) closes the fourth opening (18d) of the second compartment, and the gate valve (19) closes the first outlet (8a).

4. The device as claimed in claim 3, and comprising forced ventilation means (20, 21) configured to establish, inside the casing (50), an outdoor air flow to be conditioned withdrawable from the first inlet (7a) and a stale air flow withdrawable from the second inlet (7b);
the forced ventilation means including a first fan member (20) arranged in the first compartment (5) for conveying air at the condenser (3) and a second fan member (21) arranged in the second compartment (6) for conveying air at the evaporator (4);
wherein the control unit (16) is configured to control the forced ventilation means so that, in said first de-icing operating mode, the first fan member (20) is active and the second fan member (21) is inactive, for determining a recirculation path (P) of the air in the casing (50) sequentially through: the first opening (17a) of the first compartment, the condenser (3), the third opening (17c) of the first compartment, the third opening (18c) of the second compartment, the evaporator (4), the second opening (18b) of the second compartment, and again through the first opening (17a) of the first compartment.

5. The device as claimed in claim 4, and comprising a heat recovery unit (22) configured to define a heat exchange interface between the outdoor air supplied, in use, through the first inlet (7a) and the stale air supplied, in use, through the second inlet (7b);
and wherein the heat recovery unit (22) is fluidly positioned downstream of the first inlet (7a) and of the second inlet (7b) and upstream of the first openings (17a, 18a) and of the second openings (17b, 18b), so as to be lapped, in said first de-icing operating mode, by the air recirculated along said recirculation path (P).

6. The device as claimed in any one of claims 3 to 5, wherein the control unit (16) is configured to control the actuation of the second flap (13), for defining said first de-icing operating mode, positioning it to leave open both said second openings (17b, 18b), so that the air recirculation path (P) is defined sequentially through: the first opening (17a) and the second opening (17b) of the first compartment, the condenser (3), the third opening (17c) of the first compartment, the third opening (18c) of the second compartment, the evaporator (4), the second opening (18b) of the second compartment, and again through the first opening (17a) and the second opening (17b) of the first compartment.

7. The device as claimed in any one of claims 3 to 6, wherein the casing (50) has a third inlet (7c) fluidly connectable with the outdoor environment to receive therefrom an additional quantity of outdoor air, and a fourth inlet (7d) fluidly connectable with the indoor environment to receive therefrom air to be recirculated and reintroduced into the indoor environment;
wherein the device (1) comprises a second gate valve (23) arranged at the third inlet (7c) and actuatable to allow or prevent the passage of air through the third inlet (7c), and a fourth gate valve (24) arranged at the fourth inlet (7d) and actuatable to allow or prevent the passage of air through the fourth inlet (7d);
and wherein the control unit (16) is configured to control the actuation of the third gate valve (23) and of the fourth gate valve (24) so as to close the third inlet (7c) and the fourth inlet (7d) for defining said first de-icing operating mode.

8. The device as claimed in any one of claims 2 to 6, wherein the casing (50) has a third inlet (7c) fluidly connectable with the outdoor environment to receive therefrom an additional quantity of outdoor air and fluidly arranged upstream of the first openings (17a, 18a) to feed therein, selectively, said additional quantity, and a fourth inlet (7d) fluidly connectable with the indoor environment to receive therefrom air to be recirculated and reintroduced into the indoor environment and fluidly arranged upstream of the second openings (17b, 18b) to feed therein, selectively, said air to be recirculated;
and wherein the control unit (16) is configured to control the actuation of the first flap (12) and of the second flap (13) to define a second de-icing operating mode in which the first flap (12) closes the first opening (18a) of the second compartment and the second flap (13) closes the second opening (17b) of the first compartment so that the air to be recirculated supplied, in use, from the fourth inlet (7d) flows towards the evaporator (3).

9. The device as claimed in claim 8, wherein the control unit (16) is also configured, for defining said second de-icing operating mode, to actuate the third flap (14) so as to close the fourth opening (17d) of the first compartment, and the fourth flap (15) so as to close the third opening (18c) of the second compartment.

10. The device as claimed in any one of claims 2 to 9, wherein the casing (50) comprises a fifth opening (25) fluidly interposed between the first compartment (5) and the second compartment (6) to allow fluid communication between them;
the device (1) comprising a fifth flap (26) arranged at the fifth opening (25) and actuatable to allow or prevent the passage of air through the fifth opening (25);
and wherein the control unit (16) is configured to control the actuation of the fifth flap (26) for defining a third de-icing operating mode in which the fifth flap (26) opens the fifth opening (25) to allow the passage of heated air from the condenser (3) towards the evaporator (4).

## Patentansprüche

1. Luftklimatisierungsvorrichtung (1) zur Klimatisierung der in einer Innenumgebung vorhandenen Luft, wobei die Vorrichtung (1) umfasst:
- einen Fluidkreislauf (2), der so konfiguriert ist, dass er ein Betriebsfluid zirkulieren lässt, und der einen Kondensator (3) und einen Verdampfer (4) einschließt, die so konfiguriert sind, dass sie jeweilige Wärmeaustauschschnittstellen zwischen dem Betriebsfluid und der dorthin beförderten Luft definieren;
- ein Gehäuse (50), das den Fluidkreislauf (2) unterbringt und intern eine erste Kammer (5), die den Kondensator (3) unterbringt, und eine zweite Kammer (6), die den Verdampfer (4) unterbringt, definiert und einen ersten Einlass (7a), der strömungsmäßig mit einer Außenumgebung verbindbar ist, um zu konditionierende Außenluft von dieser zu empfangen, einen zweiten Einlass (7b), der strömungsmäßig mit der Innenumgebung verbindbar ist, um abgestandene Luft zu empfangen, einen ersten Auslass (8a), der strömungsmäßig mit der Innenumgebung verbindbar ist, um darin konditionierte Luft einzuführen, und einen zweiten Auslass (8b), der strömungsmäßig mit der Außenumgebung verbindbar ist, um die abgestandene Luft auszustoßen, aufweist;
- ein Paar von stromaufwärts gelegenen Klappen (12, 13), die strömungsmäßig stromabwärts des ersten Einlasses (7a) und des zweiten Einlasses (7b) und stromaufwärts der ersten Kammer (5) und der zweiten Kammer (6) angeordnet und betätigbar sind, um jeweils die Außenluft und die abgestandene Luft selektiv zum Kondensator (3) hin oder zum Verdampfer (4) hin zu leiten; und
**dadurch gekennzeichnet, dass** die Vorrichtung umfasst:
- ein Paar von stromabwärts gelegenen Klappen (14, 15), die jeweils strömungsmäßig stromabwärts der ersten Kammer (5) und der zweiten Kammer (6) und stromaufwärts des ersten Auslasses (8a) und des zweiten Auslasses (8b) angeordnet und betätigbar sind, um jeweils die erwärmte Luft und die gekühlte Luft selektiv zum ersten Auslass (8a) hin oder zum zweiten Auslass (8b) hin zu leiten;
wobei die Vorrichtung (1) auch eine Steuereinheit (16) einschließt, die so konfiguriert ist, dass sie die Betätigung der stromaufwärts gelegenen Klappen (12, 13) und der stromabwärts gelegenen Klappen (14, 15) steuert, um Folgendes zu definieren:
- einen Heizbetriebsmodus zum Erwärmen der Innenumgebung, in dem die stromaufwärts gelegenen Klappen (12, 13) betätigt werden, um jeweils die abgestandene Luft zur zweiten Kammer (6) hin und die Außenluft zur ersten Kammer (5) hin zu leiten, und die stromabwärts gelegenen Klappen (14, 15) betätigt werden, um jeweils die erwärmte Luft zum ersten Auslass (8a) hin und die gekühlte Luft zum zweiten Auslass (8b) hin zu leiten; und
- einen Kühlbetriebsmodus zum Kühlen der Innenumgebung, in dem die stromaufwärts gelegenen Klappen (12, 13) betätigt werden, um jeweils die abgestandene Luft zur
ersten Kammer (5) hin und die Außenluft zur zweiten Kammer (6) hin zu leiten, und die stromabwärts gelegenen Klappen (14, 15) werden betätigt, um die erwärmte Luft zum zweiten Auslass (8b) hin und die gekühlte Luft zum ersten Auslass (8a) hin zu leiten.

2. Vorrichtung nach Anspruch 1, wobei die erste Kammer (5) eine erste Öffnung (17a) zum Empfangen der abgestandenen Luft, eine zweite Öffnung (17b) zum Empfangen der Außenluft, eine dritte Öffnung (17c) zum Zuführen erwärmter Luft vom Kondensator (3) zum ersten Auslass (8a) und eine vierte Öffnung (17d) zum Zuführen erwärmter Luft vom Kondensator (3) zum zweiten Auslass (8b) aufweist;
wobei die zweite Kammer (6) eine erste Öffnung (18a) zum Empfangen der abgestandenen Luft, eine zweite Öffnung (18b) zum Empfangen der Außenluft, eine dritte Öffnung (18c) zum Zuführen gekühlter Luft vom Verdampfer (4) zum ersten Auslass (8a) und eine vierte Öffnung (18d) zum Zuführen gekühlter Luft vom Verdampfer (4) zum zweiten Auslass (8b) aufweist;
wobei die Vorrichtung (1) ferner Folgendes umfasst:
- eine erste Klappe (12), die strömungsmäßig stromabwärts des zweiten Einlasses (7b) und an den ersten Öffnungen (17a, 18a) angeordnet und betätigbar ist, um selektiv die erste Öffnung (17a) der ersten Kammer (5) oder die erste Öffnung (18a) der zweiten Kammer (6) zu verschließen, um den Durchgang von abgestandener Luft jeweils zur zweiten Kammer (6) hin oder zur ersten Kammer (5) hin zu ermöglichen;
- eine zweite Klappe (13), die strömungsmäßig stromabwärts des ersten Einlasses (7a) und an den zweiten Öffnungen (17b, 18b) angeordnet und betätigbar ist, um selektiv die zweite Öffnung (17b) der ersten Kammer (5) oder die zweite Öffnung (18b) der zweiten Kammer (6) zu schließen, um den Durchgang der Außenluft jeweils zur zweiten Kammer (6) hin oder zur ersten Kammer (5) hin zu ermöglichen;
- eine dritte Klappe (14), die strömungsmäßig stromabwärts des Kondensators (3) und an der dritten Öffnung (17c) und der vierten Öffnung (17d) der ersten Kammer (5) angeordnet und betätigbar ist, um selektiv die dritte Öffnung (17c) oder die vierte Öffnung (17d) der ersten Kammer (5) zu schließen, um den Durchgang erwärmter Luft jeweils zum zweiten Auslass (8b) hin oder zum ersten Auslass (8a) hin zu ermöglichen; und
- eine vierte Klappe (15), die strömungsmäßig stromabwärts des Verdampfers (4) und an der dritten Öffnung (18c) und der vierten Öffnung (18d) der zweiten Kammer (6) angeordnet und betätigbar ist, um selektiv die dritte Öffnung (18c) oder die vierte Öffnung (18d) der zweiten Kammer (6) zu schließen, um den Durchgang gekühlter Luft jeweils zum zweiten Auslass (8b) hin oder zum ersten Auslass (8a) hin zu ermöglichen;
und wobei die Steuereinheit (16) so konfiguriert ist, dass sie die Betätigung der ersten Klappe (12), der zweiten Klappe (13), der dritten Klappe (14) und der vierten Klappe (15) steuert, um Folgendes zu definieren:
- den Heizbetriebsmodus zum Erwärmen der Innenumgebung, in dem die erste Klappe (12) die erste Öffnung (17a) der ersten Kammer (5) verschließt, die zweite Klappe (13) die zweite Öffnung (18b) der zweiten Kammer (6) verschließt, die dritte Klappe (14) die vierte Öffnung (17d) der ersten Kammer (5) verschließt und die vierte Klappe (15) die dritte Öffnung (18c) der zweiten Kammer (6) verschließt; und
- den Kühlbetriebsmodus zum Kühlen der Innenumgebung, in dem die erste Klappe (12) die erste Öffnung (18a) der zweiten Kammer (6) verschließt, die zweite Klappe (13) die zweite Öffnung (17b) der ersten Kammer (5) verschließt, die dritte Klappe (14) die dritte Öffnung (17c) der ersten Kammer (5) verschließt und die vierte Klappe (15) die vierte Öffnung (18d) der zweiten Kammer (6) verschließt.

3. Vorrichtung nach Anspruch 2 und ferner mindestens umfassend ein Absperrventil (19), das an dem ersten Auslass (8a) angeordnet und betätigbar ist, um den Durchgang von Luft durch den ersten Auslass (8a) zu ermöglichen oder zu verhindern;
und wobei die Steuereinheit (16) ferner so konfiguriert ist, dass sie die Betätigung des Absperrventils (19), der ersten Klappe (12), der zweiten Klappe (13), der dritten Klappe (14) und der vierten Klappe (15) steuert, um einen ersten Enteisungsbetriebsmodus zu definieren, in dem die erste Klappe (12) die erste Öffnung (18a) der zweiten Kammer verschließt, die zweite Klappe (13) so positioniert ist, dass sie zumindest die zweite Öffnung (18b) der zweiten Kammer offen lässt, die dritte Klappe (14) die vierte Öffnung (17d) der ersten Kammer verschließt, die vierte Klappe (15) die vierte Öffnung (18d) der zweiten Kammer verschließt und das Absperrventil (19) den ersten Auslass (8a) verschließt.

4. Vorrichtung nach Anspruch 3 und umfassend Zwangsbelüftungsmittel (20, 21), die konfiguriert sind, um innerhalb des Gehäuses (50) einen zu konditionierenden Außenluftstrom, der von dem ersten Einlass (7a) abziehbar ist, und einen abgestandenen Luftstrom, der von dem zweiten Einlass (7b) abziehbar ist, herzustellen;
wobei die Zwangsbelüftungsmittel ein erstes Gebläseelement (20), das in der ersten Kammer (5) zum Befördern von Luft an dem Kondensator (3) angeordnet ist, und ein zweites Gebläseelement (21), das in der zweiten Kammer (6) zum Befördern von Luft an dem Verdampfer (4) angeordnet ist, einschließen;
wobei die Steuereinheit (16) so konfiguriert ist, dass sie die Zwangsbelüftungsmittel so steuert, dass im ersten Enteisungsbetriebsmodus das erste Gebläseelement (20) aktiv ist und das zweite Gebläseelement (21) inaktiv ist, zur Bestimmung eines Umwälzungspfads (P) der Luft in dem Gehäuse (50) sequentiell durch: die erste Öffnung (17a) der ersten Kammer, den Kondensator (3), die dritte Öffnung (17c) der ersten Kammer, die dritte Öffnung (18c) der zweiten Kammer, den Verdampfer (4), die zweite Öffnung (18b) der zweiten Kammer, und wiederum durch die erste Öffnung (17a) der ersten Kammer.

5. Vorrichtung nach Anspruch 4 und umfassend eine Wärmerückgewinnungseinheit (22), die dazu konfiguriert ist, eine Wärmeaustauschschnittstelle zwischen der Außenluft, die im Gebrauch durch den ersten Einlass (7a) geliefert wird, und der abgestandenen Luft, die im Gebrauch durch den zweiten Einlass (7b) geliefert wird, zu definieren;
und wobei die Wärmerückgewinnungseinheit (22) stromabwärts des ersten Einlasses (7a) und des zweiten Einlasses (7b) und stromaufwärts der ersten Öffnungen (17a, 18a) und der zweiten Öffnungen (17b, 18b) strömungsmäßig positioniert ist, um im ersten Enteisungsbetriebsmodus von der entlang des Umwälzungspfads (P) umgewälzten Luft geläppt zu werden.

6. Vorrichtung nach einem der Ansprüche 3 bis 5, wobei die Steuereinheit (16) so konfiguriert ist, dass sie die Betätigung der zweiten Klappe (13) steuert, um den ersten Enteisungsbetriebsmodus zu definieren, indem sie diese so positioniert, dass sie die beiden zweiten Öffnungen (17b, 18b) offen lässt, so dass der Luftumwälzungspfad (P) sequentiell definiert wird durch: die erste Öffnung (17a) und die zweite Öffnung (17b) der ersten Kammer, den Kondensator (3), die dritte Öffnung (17c) der ersten Kammer, die dritte Öffnung (18c) der zweiten Kammer, den Verdampfer (4), die zweite Öffnung (18b) der zweiten Kammer, und wiederum durch die erste Öffnung (17a) und die zweite Öffnung (17b) der ersten Kammer.

7. Vorrichtung nach einem der Ansprüche 3 bis 6, wobei das Gehäuse (50) einen dritten Einlass (7c), der strömungsmäßig mit der Außenumgebung verbindbar ist, um von dieser eine zusätzliche Menge an Außenluft zu empfangen, und einen vierten Einlass (7d) aufweist, der strömungsmäßig mit der Innenumgebung verbindbar ist, um Luft von dieser zu empfangen, die umgewälzt und wieder in die Innenumgebung eingeführt werden soll;
wobei die Vorrichtung (1) ein zweites Absperrventil (23), das an dem dritten Einlass (7c) angeordnet und betätigbar ist, um den Durchgang von Luft durch den dritten Einlass (7c) zu ermöglichen oder zu verhindern, und ein viertes Absperrventil (24), das an dem vierten Einlass (7d) angeordnet und betätigbar ist, um den Durchgang von Luft durch den vierten Einlass (7d) zu ermöglichen oder zu verhindern, umfasst;
und wobei die Steuereinheit (16) so konfiguriert ist, dass sie die Betätigung des dritten Absperrventils (23) und des vierten Absperrventils (24) steuert, um den dritten Einlass (7c) und den vierten Einlass (7d) zu schließen, um den ersten Enteisungsbetriebsmodus zu definieren.

8. Vorrichtung nach einem der Ansprüche 2 bis 6, wobei das Gehäuse (50) einen dritten Einlass (7c), der strömungsmäßig mit der Außenumgebung verbindbar ist, um von dieser eine zusätzliche Menge an Außenluft zu empfangen, und der strömungsmäßig stromaufwärts der ersten Öffnungen (17a, 18a) angeordnet ist, um darin selektiv die zusätzliche Menge zuzuführen, und einen vierten Einlass (7d) aufweist, der strömungsmäßig mit der Innenumgebung verbindbar ist, um Luft von dieser zu empfangen, die umgewälzt und wieder in die Innenumgebung eingeführt werden soll, und der strömungsmäßig stromaufwärts der zweiten Öffnungen (17b, 18b) angeordnet ist, um darin selektiv die umzuwälzende Luft zuzuführen;
und wobei die Steuereinheit (16) so konfiguriert ist, dass sie die Betätigung der ersten Klappe (12) und der zweiten Klappe (13) steuert, um einen zweiten Enteisungsbetriebsmodus zu definieren, in dem die erste Klappe (12) die erste Öffnung (18a) der zweiten Kammer verschließt und die zweite Klappe (13) die zweite Öffnung (17b) der ersten Kammer verschließt, so dass die umzuwälzende Luft, die im Gebrauch vom vierten Einlass (7d) geliefert wird, zum Verdampfer (3) hin strömt.

9. Vorrichtung nach Anspruch 8, wobei die Steuereinheit (16) auch konfiguriert ist, um den zweiten Enteisungsbetriebsmodus zu definieren, um die dritte Klappe (14) zu betätigen, um die vierte Öffnung (17d) der ersten Kammer zu verschließen, und um die vierte Klappe (15) zu betätigen, um die dritte Öffnung (18c) der zweiten Kammer zu verschließen.

10. Vorrichtung nach einem der Ansprüche 2 bis 9, wobei das Gehäuse (50) eine fünfte Öffnung (25) aufweist, die strömungsmäßig zwischen der ersten Kammer (5) und der zweiten Kammer (6) angeordnet ist, um eine Fluidkommunikation zwischen ihnen zu ermöglichen;
wobei die Vorrichtung (1) eine fünfte Klappe (26) umfasst, die an der fünften Öffnung (25) angeordnet und betätigbar ist, um den Durchgang von Luft durch die fünfte Öffnung (25) zu ermöglichen oder zu verhindern;
und wobei die Steuereinheit (16) so konfiguriert ist, dass sie die Betätigung der fünften Klappe (26) steuert, um einen dritten Enteisungsbetriebsmodus zu definieren, in dem die fünfte Klappe (26) die fünfte Öffnung (25) öffnet, um den Durchgang erwärmter Luft vom Kondensator (3) zum Verdampfer (4) hin zu ermöglichen.

## Revendications

1. Dispositif de climatisation (1) pour conditionner l'air présent dans un environnement intérieur, le dispositif (1) comprenant :
- un circuit fluidique (2) configuré pour faire circuler un fluide opérationnel et comprenant un condenseur (3) et un évaporateur (4) configurés pour définir des interfaces d'échange de chaleur respectives entre le fluide opérationnel et l'air qui y est transporté ;
- un boîtier (50) abritant le circuit fluidique (2), définissant intérieurement un premier compartiment (5) abritant le condenseur (3) et un deuxième compartiment (6) abritant l'évaporateur (4), et comprenant une première entrée (7a) pouvant être connectée fluidiquement à un environnement extérieur pour recevoir de l'air extérieur à conditionner, une deuxième entrée (7b) pouvant être reliée fluidiquement à l'environnement intérieur pour recevoir l'air vicié, une première sortie (8a) pouvant être reliée fluidiquement à l'environnement intérieur pour y introduire l'air conditionné et une deuxième sortie (8b) pouvant être reliée fluidiquement à l'environnement extérieur pour éjecter l'air vicié ;
- une paire de rabats en amont (12, 13) disposés fluidiquement en aval de la première entrée (7a) et de la deuxième entrée (7b) et en amont du premier compartiment (5) et du deuxième compartiment (6) et pouvant être actionnés pour diriger respectivement l'air extérieur et l'air vicié sélectivement vers le condenseur (3) ou l'évaporateur (4) ; et
**caractérisé en ce que** le dispositif comprend :
- une paire de rabats en aval (14, 15) disposés fluidiquement en aval du premier compartiment (5) et du deuxième compartiment (6), respectivement, et en amont de la première sortie (8a) et de la deuxième sortie (8b) et pouvant être actionnés pour diriger respectivement l'air chauffé et l'air refroidi sélectivement vers la première sortie (8a) ou la deuxième sortie (8b) ;
dans lequel le dispositif (1) comprend également une unité de commande (16) configurée pour commander l'actionnement des rabats en amont (12, 13) et des rabats en aval (14, 15) pour définir :
- un mode de fonctionnement de chauffage pour chauffer l'environnement intérieur, dans lequel les rabats en amont (12, 13) sont actionnés pour diriger respectivement l'air vicié vers le deuxième compartiment (6) et l'air extérieur vers le premier compartiment (5), et les rabats en aval (14, 15) sont actionnés pour diriger respectivement l'air chauffé vers la première sortie (8a) et l'air refroidi vers la deuxième sortie (8b) ; et
- un mode de fonctionnement de refroidissement pour refroidir l'environnement intérieur, dans lequel les rabats en amont (12, 13) sont actionnés pour diriger respectivement l'air vicié vers
le premier compartiment (5) et l'air extérieur vers le deuxième compartiment (6), et les rabats en aval (14, 15) sont actionnés pour diriger respectivement l'air chauffé vers la deuxième sortie (8b) et l'air refroidi vers la première sortie (8a).

2. Dispositif selon la revendication 1, dans lequel le premier compartiment (5) possède une première ouverture (17a) pour recevoir l'air vicié, une deuxième ouverture (17b) pour recevoir l'air extérieur, une troisième ouverture (17c) pour acheminer l'air chauffé du condenseur (3) vers la première sortie (8a) et une quatrième ouverture (17d) pour acheminer l'air chauffé du condenseur (3) vers la deuxième sortie (8b) ;
dans lequel le deuxième compartiment (6) possède une première ouverture (18a) pour recevoir l'air vicié, une deuxième ouverture (18b) pour recevoir l'air extérieur, une troisième ouverture (18c) pour acheminer l'air refroidi de l'évaporateur (4) vers la première sortie (8a) et une quatrième ouverture (18d) pour acheminer l'air refroidi de l'évaporateur (4) vers la deuxième sortie (8b) ;
le dispositif (1) comprend en outre :
- un premier rabat (12) disposé fluidiquement en aval de la deuxième entrée (7b) et au niveau desdites premières ouvertures (17a, 18a) et pouvant être actionné pour fermer sélectivement la première ouverture (17a) du premier compartiment (5) ou la première ouverture (18a) du deuxième compartiment (6) de manière à permettre le passage dudit air vicié vers le deuxième compartiment (6) ou le premier compartiment (5), respectivement ;
- un deuxième rabat (13) disposé fluidiquement en aval de la première entrée (7a) et au niveau desdites deuxièmes ouvertures (17b, 18b) et pouvant être actionné pour fermer sélectivement la deuxième ouverture (17b) du premier compartiment (5) ou la deuxième ouverture (18b) du deuxième compartiment (6) de manière à permettre le passage dudit air extérieur vers le deuxième compartiment (6) ou le premier compartiment (5), respectivement ;
- un troisième rabat (14) disposé fluidiquement en aval du condenseur (3) et au niveau de la troisième ouverture (17c) et de la quatrième ouverture (17d) du premier compartiment (5) et pouvant être actionné pour fermer sélectivement la troisième ouverture (17c) ou la quatrième ouverture (17d) du premier compartiment (5) de manière à permettre le passage de l'air chauffé vers la deuxième sortie (8b) ou la première sortie (8a), respectivement ; et
- un quatrième rabat (15) disposé fluidiquement en aval de l'évaporateur (4) et au niveau de la troisième ouverture (18c) et de la quatrième ouverture (18d) du deuxième compartiment (6) et pouvant être actionné pour fermer sélectivement la troisième ouverture (18c) ou la quatrième ouverture (18d) du deuxième compartiment (6) de manière à permettre le passage de l'air refroidi vers la deuxième sortie (8b) ou la première sortie (8a), respectivement ;
et dans lequel l'unité de commande (16) est configurée pour commander l'actionnement du premier rabat (12), du deuxième rabat (13), du troisième rabat (14) et du quatrième rabat (15) pour définir :
- ledit mode de fonctionnement de chauffage pour chauffer l'environnement intérieur, dans lequel le premier rabat (12) ferme la première ouverture (17a) du premier compartiment (5), le deuxième rabat (13) ferme la deuxième ouverture (18b) du deuxième compartiment (6), le troisième rabat (14) ferme la quatrième ouverture (17d) du premier compartiment (5), et le quatrième rabat (15) ferme la troisième ouverture (18c) du deuxième compartiment (6) ; et
- ledit mode de fonctionnement de refroidissement de l'environnement intérieur, dans lequel le premier rabat (12) ferme la première ouverture (18a) du deuxième compartiment (6), le deuxième rabat (13) ferme la deuxième ouverture (17b) du premier compartiment (5), le troisième rabat (14) ferme la troisième ouverture (17c) du premier compartiment (5), et le quatrième rabat (15) ferme la quatrième ouverture (18d) du deuxième compartiment (6).

3. Dispositif selon la revendication 2, comprenant en outre au moins un robinet-vanne (19) disposé au niveau de la première sortie (8a) et pouvant être actionné pour permettre ou empêcher le passage de l'air à travers la première sortie (8a) ;
et dans lequel l'unité de commande (16) est en outre configurée pour commander l'actionnement du robinet-vanne (19), du premier rabat (12), du deuxième rabat (13), du troisième rabat (14) et du quatrième rabat (15) pour définir un premier mode de fonctionnement de dégivrage dans lequel le premier rabat (12) ferme la première ouverture (18a) du deuxième compartiment, le deuxième rabat (13) est positionné de manière à laisser ouverte au moins la deuxième ouverture (18b) du deuxième compartiment, le troisième rabat (14) ferme la quatrième ouverture (17d) du premier compartiment, le quatrième rabat (15) ferme la quatrième ouverture (18d) du deuxième compartiment, et le robinet-vanne (19) ferme la première sortie (8a).

4. Dispositif selon la revendication 3, comprenant des moyens de ventilation forcée (20, 21) configurés pour établir, à l'intérieur du boîtier (50), un flux d'air extérieur à conditionner prélevé par la première entrée (7a) et un flux d'air vicié prélevé par la deuxième entrée (7b) ;
les moyens de ventilation forcée comprenant un premier élément de ventilateur (20) disposé dans le premier compartiment (5) pour acheminer l'air au condenseur (3) et un deuxième élément de ventilateur (21) disposé dans le deuxième compartiment (6) pour acheminer l'air à l'évaporateur (4) ;
dans lequel l'unité de commande (16) est configurée pour commander les moyens de ventilation forcée de sorte que, dans ledit premier mode de fonctionnement de dégivrage, le premier élément de ventilateur (20) est actif et le deuxième élément de ventilateur (21) est inactif, pour déterminer une voie de recirculation (P) de l'air dans le boîtier (50) séquentiellement à travers : la première ouverture (17a) du premier compartiment, le condenseur (3), la troisième ouverture (17c) du premier compartiment, la troisième ouverture (18c) du deuxième compartiment, l'évaporateur (4), la deuxième ouverture (18b) du deuxième compartiment, et à nouveau à travers la première ouverture (17a) du premier compartiment.

5. Dispositif selon la revendication 4, comprenant une unité de récupération de chaleur (22) configurée pour définir une interface d'échange de chaleur entre l'air extérieur fourni, en cours d'utilisation, à travers la première entrée (7a) et l'air vicié fourni, en cours d'utilisation, à travers la deuxième entrée (7b) ;
et dans lequel l'unité de récupération de chaleur (22) est positionnée fluidiquement en aval de la première entrée (7a) et de la deuxième entrée (7b) et en amont des premières ouvertures (17a, 18a) et des deuxièmes ouvertures (17b, 18b), de manière à être recouverte, dans ledit premier mode de fonctionnement de dégivrage, par l'air recirculé le long de ladite voie de recirculation (P).

6. Dispositif selon l'une quelconque des revendications 3 à 5, dans lequel l'unité de commande (16) est configurée pour commander l'actionnement du deuxième rabat (13), pour définir ledit premier mode de fonctionnement de dégivrage, en le positionnant de manière à laisser ouvertes lesdites deux deuxièmes ouvertures (17b, 18b), de sorte que la voie de recirculation de l'air (P) est défini séquentiellement à travers : la première ouverture (17a) et la deuxième ouverture (17b) du premier compartiment, le condenseur (3), la troisième ouverture (17c) du premier compartiment, la troisième ouverture (18c) du deuxième compartiment, l'évaporateur (4), la deuxième ouverture (18b) du deuxième compartiment, et à nouveau à travers la première ouverture (17a) et la deuxième ouverture (17b) du premier compartiment.

7. Dispositif selon l'une quelconque des revendications 3 à 6, dans lequel le boîtier (50) possède une troisième entrée (7c) pouvant être reliée fluidiquement à l'environnement extérieur pour recevoir une quantité supplémentaire d'air extérieur, et une quatrième entrée (7d) pouvant être reliée fluidiquement à l'environnement intérieur pour recevoir de l'air à recirculer et à réintroduire dans l'environnement intérieur ;
dans lequel le dispositif (1) comprend un deuxième robinet-vanne (23) placé au niveau de la troisième entrée (7c) et pouvant être actionné pour permettre ou empêcher le passage de l'air à travers la troisième entrée (7c), et un quatrième robinet-vanne (24) placé au niveau de la quatrième entrée (7d) et pouvant être actionné pour permettre ou empêcher le passage de l'air à travers la quatrième entrée (7d) ;
et dans lequel l'unité de commande (16) est configurée pour commander l'actionnement du troisième robinet-vanne (23) et du quatrième robinet-vanne (24) de manière à fermer la troisième entrée (7c) et la quatrième entrée (7d) pour définir ledit premier mode de fonctionnement de dégivrage.

8. Dispositif selon l'une quelconque des revendications 2 à 6, dans lequel le boîtier (50) possède une troisième entrée (7c) pouvant être reliée fluidiquement à l'environnement extérieur pour recevoir une quantité supplémentaire d'air extérieur et disposée fluidiquement en amont des premières ouvertures (17a, 18a) pour y acheminer, de manière sélective, ladite quantité supplémentaire, et une quatrième entrée (7d) pouvant être reliée fluidiquement à l'environnement intérieur pour recevoir de l'air à recirculer et à réintroduire dans l'environnement intérieur et disposée fluidiquement en amont des deuxièmes ouvertures (17b, 18b) pour y acheminer, sélectivement ledit air à recirculer ;
et dans lequel l'unité de commande (16) est configurée pour commander l'actionnement du premier rabat (12) et du deuxième rabat (13) pour définir un deuxième mode de fonctionnement de dégivrage dans lequel le premier rabat (12) ferme la première ouverture (18a) du deuxième compartiment et le deuxième rabat (13) ferme la deuxième ouverture (17b) du premier compartiment de sorte que l'air à recycler fourni, en cours d'utilisation, par la quatrième entrée (7d) s'écoule vers l'évaporateur (3).

9. Dispositif selon la revendication 8, dans lequel l'unité de commande (16) est également configurée, pour définir ledit deuxième mode de fonctionnement de dégivrage, pour actionner le troisième rabat (14) de manière à fermer la quatrième ouverture (17d) du premier compartiment, et le quatrième rabat (15) de manière à fermer la troisième ouverture (18c) du deuxième compartiment.

10. Dispositif selon l'une quelconque des revendications 2 à 9, dans lequel le boîtier (50) comprend une cinquième ouverture (25) interposée fluidiquement entre le premier compartiment (5) et le deuxième compartiment (6) pour permettre la communication fluidique entre eux ;
le dispositif (1) comprenant un cinquième rabat (26) disposé au niveau de la cinquième ouverture (25) et pouvant être actionné pour permettre ou empêcher le passage de l'air à travers la cinquième ouverture (25) ;
et dans lequel l'unité de commande (16) est configurée pour commander l'actionnement du cinquième rabat (26) pour définir un troisième mode de fonctionnement de dégivrage dans lequel le cinquième rabat (26) ouvre la cinquième ouverture (25) pour permettre le passage de l'air chauffé du condenseur (3) vers l'évaporateur (4).
